# EUROPEAN PATENT APPLICATION

(11) **EP 2 615 792 A1**
(43) Date of publication of application: **17.07.2013**
(21) Application number: 13151148.7
(22) Date of filing: 14.01.2013
(51) Int. Cl.: H04L 29/06, G06F 21/55

(54) **Methods and Systems for Providing Network Protection by Progressive Degradation of Service**

(30) Priority: 12.01.2012 US 201261586054 P
(71) Applicant: ARXCEO Corporation, Atlanta, GA 30309 (US)
(72) Inventor: Winn, James Marcus, Atlanta, GA Georgia 30306 (US); Yoda, Nobuhisa, Colorado, CO Colorado 80111 (US); Somers, Jonathan, Jacksonville, FL Florida 32258 (US)
(74) Representative: Harris, Ian Richard

(57) **Abstract**

Systems and methods are provided for protecting a defense with a self defending intrusion system. Data packets may be monitored to detect a pattern of activity indicating a potential attack. Upon detection of a threat, a countermeasure or progressive degradation of network services may be initiated on a selected basis so controllable reduce performance of data communication of the device.

## Description

### CROSS-REFERENCE

This application claims priority to U.S. Provisional Patent Application Serial No. 61/586,054, filed on January 12, 2012, which is entirely incorporated herein by reference.

### BACKGROUND OF THE INVENTION

In computer network security, Intrusion Detection Systems (IDS's) and Intrusion Prevention Systems (IPS's) commonly employ a variety of techniques to determine whether a device or network is threatened by a potential intruder. These systems may also implement and use various countermeasures to stop an intruder. One of the basic assumptions on which these systems rely in order to stop an intrusion is that the source of the threat is external to the device or network being protected.

For example, in traditional IDS and IPS solutions, a common countermeasure is to block the source of an intrusion originating from outside a protected network. Typically, such blockage is carried out by silently dropping all network traffic originating from the intruder's network address. However presently known solutions usually do not anticipate or expect that the source of a threat may be the actual device itself that is being protected.

Consider the case in which the user of a protected device has (either intentionally or inadvertently) installed a rogue piece of software containing malicious code, perhaps an infected version of an otherwise legitimate program. The malicious code now begins opening ports and attempting to propagate itself to other computers. If the protected device has an IDS or IPS solution installed, it may be able to identify that the threat originates from the device itself, but what can it do? If the IPS blocks all traffic from the address of the threat, as is commonly done, then the result will be that all network traffic from the protected device will be dropped. Consequently, the protected device will be completely unable to communicate. With the emergence of cloud computing and totally network-based mobile computers, the loss of communications would mean the complete loss of use of the device.

There is a need to provide network protection against intrusions originating both internally and externally. At the same time, there is a need to strike a balance between shutting down network traffic at the protected device and continuing to provide network connectivity for programs and processes that are not rogue, allowing the device to sustain its value to its user as long as possible without compromising security.

### SUMMARY OF INVENTION

In some aspects, this invention relates to a method for protecting a device with a self-defending intrusion prevention system (IPS) comprising: monitoring the data packets to detect a pattern of activity indicating a potential attack that originates within the device; detecting a threat originating from within the protected device; and initiating, upon detection of the threat, a self-defending countermeasure or progressive degradation of network services available on the device on a selected basis to controllably reduce performance of data communication of the device over a selected period of time without abruptly cutting off services to or communications from the device.

In some aspects, the said countermeasure or progressive degradation includes determining whether to deliver or discard a particular data packet provided to the network device based on information about the particular data packet.

In some aspects, the said determination whether to deliver or discard a particular data packet is made based on information that is not limited to an originating IP address of the data packet.

In some aspects the said determination to deliver or discard a particular data packet is made while the device is permitted to continue operating.

In some aspects the said pattern of activity includes sequentially accessing IP addresses or performing port scans on sequential port numbers.

In some aspects, this invention relates to a method for providing device protection comprising the following steps: receiving a data packet at a network device, reading information, with aid of a processor, from the data packet; and analyzing, with aid of the processor, whether to discard or deliver the data packet to one or more application of the network device based on the information, wherein said analysis considers information of the data packets that originates within the device, and selectively discarding the data packets that originate from a rogue application within the device.

In some aspects, this invention relates to a device for providing network protection, said device comprising: a network interface configured to permit receipt of a data packet from a network external to the device, a network stack in communication with the network interface, one or more applications capable of sending and receiving the data packet, and an self-defending intrusion protection service module in communication with the network stack programmed to analyze the data packet that originates from the one or more applications within the device and determine whether the data packet is to be delivered to destinations or to be discarded to protect the device from the intrusion threat while maximizing usability of the device.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:

Figure 1 illustrates a network of mobile devices or computers that incorporates concepts of the invention to protect the network for intrusions or attacks.

Figure 2 illustrates a flow of an embodiment where a combination of a blacklist and detection of the sequential address attack are used to control delivery of packets.

Figure 3 illustrates a flow of an embodiment where packets are blocked only during a predetermined time period and not blocked outside the period.

Figure 4 illustrates a flow of an embodiment where packets are selectively dropped based on drop rates, which change over time.

Figure 5 illustrates a sample graph of Packet Drop Rate as time lapses.

Figure 6 illustrates a flow of an embodiment where packets are selectively dropped based on detecting rogue processes while delivering the rest of the packets.

Figure 7 illustrates a flow of an embodiment where packets are selectively dropped and also a communication channel is disabled.

Figure 8 illustrates a flow of an embodiment where a whitelist is used to selectively deliver packets while the network service quality is progressively degraded.

Figure 9 illustrates a flow of where packets are selectively dropped by use of blacklist.

### DETAILED DESCRIPTION OF THE INVENTION

This invention provides a defense to a device when the threat is coming from within, not necessarily from outside the device, by selectively dropping traffic at the device to minimize the impact to operations of the device while effectively protecting the device from a threat by a rogue program within the device, instead of simply blacklisting oneself and dropping all traffic to totally disable the usability of the device.

While preferred embodiments of the invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in applying the invention.

Various aspects of the invention described herein may be applied to any of the particular applications set forth below or for any other types of communication situations. The invention may be applied as a standalone system or method, or as part of a data security system. It shall be understood that different aspects of the invention can be appreciated individually, collectively, or in combination with each other.

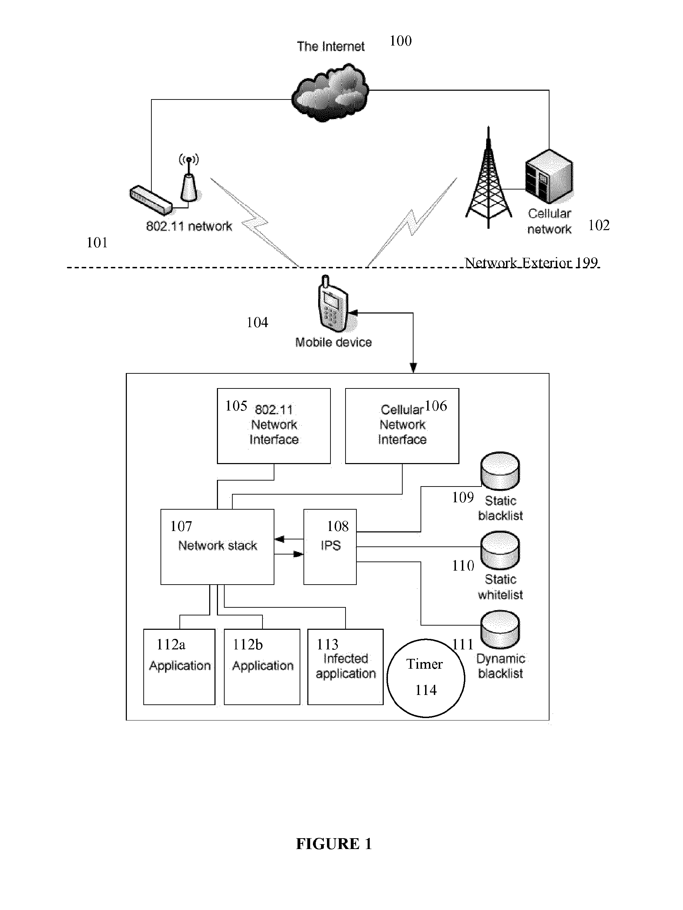

One aspect of the invention provides self-defending intrusion prevention systems. As shown in Figure 1, Mobile Device 104 is connected to the Internet 100 via at least one network, such as a wireless network using radio waves (e.g., 802.11 WiFi network) 101 and cellular network 102. Any description of specific examples of such networks and/or interfaces can apply to other networks and/or interfaces of the same type and vice versa.

Within Mobile Device 104, 802.11 Network Interface 105 sends to and receives data packets from the 802.11 Network 101. Cellular Network Interface 106 sends to and receives data packets from Cellular network 102. Network Exterior 199 designates an exterior of Mobile Device 104 on the network side. There are one or more Applications (112a, 112b, 113). Infected Application 113 is a type of applications that is labeled as rogue because the system has determined that the application has been infected by virus or other rogue attackers to applications. Network Stack 107 parses and routes data packets as the packets are sent between Applications 112a/112b/113 and network interfaces 105/106. Moreover, Network Stack 107 communicates with IPS (Intrusion Protection Service) module 108, as IPS 108 analyzes and determines whether packets are to be delivered to destinations or to be dropped because of security concerns such as attacks from rogue servers or processes. IPS 108 connects with Static blacklist 109, Static whitelist 110 and/or Dynamic blacklist 111. These lists contain information about origin or senders of packets that requires attention. Blacklists contain information about servers or application processes that are rogue and packets associated with these are determined by IPS 108 to be dropped. Dynamic blacklist 111 allows IPS 108 to modify the list. Information about servers or application processes is stored in the form of IP addresses and port numbers if the entity is in the Network Exterior 199, and in terms of application names and process IDs if the entity is associated with applications inside the Mobile Device 104. One or more of the blacklists may be stored on the Mobile Device 104, or external to the mobile device (e.g., Network Exterior 199), or any combination thereof. The Mobile Device 104 may also contain Timer 114 to count time for determining such periods as to block data packet transmission during a predetermined time period.

Such a system may progressively degrade network services available on devices on a selected basis. The gradual deployment of such countermeasures to controllably reduce performance may allow a user of the device to continue operating for at least some period of time. Even a relatively small amount of time can provide an opportunity long enough to at least save documents or end communication sessions in an orderly fashion. Accordingly, this invention effectively provide self-defending intrusion functionality for threats originating from within the device itself, while maximizing the usability of the device by avoiding dropping all the traffic upon detection of such a threat.

It shall be understood that the mobile device and a variety of other kinds of devices may be connected to the networks. The devices may be network devices including a personal computer, server computer, or laptop computer; mobile devices, such as a tablet, personal digital assistants (PDAs) such as a Palm-based device or Windows CE device; phones such as cellular phones, smartphones (e.g., iPhone, BlackBerry, Android, Treo); a wireless device such as a wireless email device or other device capable of communicating wirelessly with a computer network or other communication network; or any other type of network device that may communicate over a network and handle electronic transactions. One or more of the devices may be handheld devices. Any discussion herein of computers or mobile devices may also be applied to any other network devices as provided.

Furthermore, the devices may be the same type of device and/or may include different types of devices. For example, the devices may be a computer, a smartphone, and/or a tablet. Mobile devices may interact with the system and communicate over networks and web servers via the Internet. The communication between a network device and a network may be, for example, a connection between a client computer and a cellular network. One or more networks may communicate with one or more computers or other network devices across a particular network. For example, a plurality of devices may communicate with a single network, or with a plurality of networks. The network, for example, can include a private network, such as a LAN, or interconnections to the online organizations over a communications network, such as the Internet or World Wide Web or any other network that is capable of communicating digital data, such as a wireless, cellular, or telecommunications network. Each computer or other network device may connect to one or more web server over the network using data protocols, such as HTTP, HTTPS and the like.

In accordance with the invention, as shown in Figure 1, a user may interact with a variety of networks via a mobile device (e.g., tablet, smartphone) or other network device that may form part of an overall IPS 108. The device may include various network interfaces to communicate with cellular networks, 802.11 networks or other IEEE standards based networks. When a network device is communicating with the networks, the device may have a processor and memory that may store an operating system (OS) and a browser application or other application to facilitate communications with the web server. For example, the operating system may operate to display a graphical user interface to the user and permit the user to execute other computer programs, such as the browser application. The browser application, such as Microsoft Internet Explorer, Mozilla Firefox, when executed by the processor, permits the user to access the World Wide Web as is well known. Similarly, other applications or "apps" on mobile devices may be used. Any display known in the art may be used including, but not limited to, a cathode ray tube, a liquid crystal display, a plasma screen, a touchscreen, an LED screen, or an OLED display.

The devices and/or server may include one or more processor and/or memory. In some instances, the memory may store one or more computer program products or non-transitory computer readable media, which may include code, logic or instructions for performing one or more steps. The processor may execute one or more steps indicative of the non-transitory computer readable media. The processor may be capable of executing one or more steps of the methods provided herein to automatically self-defend against intrusions. The IPS 108's provided herein may operate with a selected network or protocol stack and may detect and monitor various applications downloaded or stored in device memory. In accordance with the invention, a recognized pattern of activity may be detected that suggests a network intrusion. For example, an infected application may be detected as it executes instructions to perform suspicious activity such as sequentially accessing IP addresses, and performing port scans on sequential port numbers. In accordance with an implementation of the invention, the IPS 108 residing in memory on the device itself may anticipate, detect and/or perform drop functions. Accordingly, only a partial degradation of service may be provided as some (but not necessarily all) packets are dropped periodically depending on the countermeasure taken.

One or more self-defending steps or countermeasures provided herein may occur as described dictated by one or more set of rules. The rules may perform automated countermeasures based on a set of one or more conditions. The device may provide automated intrusion prevention without requiring human intervention at one or more steps. It shall be understood that the network devices may have one or more memory that may include one or more computer program products or non-transitory and/or tangible computer readable media which may contain instructions, logic, data, or code that may be stored in persistent or temporary memory of the computer or other device, or may somehow affect or initiate action by the computer or other device. The memory may also include one or more databases.

Another aspect of the invention provides methods of implementing network performance degradation on a selected basis. A variety of countermeasures may be executed depending on selected parameters. Such actions to disrupt or degrade available services may be taken automatically to defend a network without user instruction or awareness.

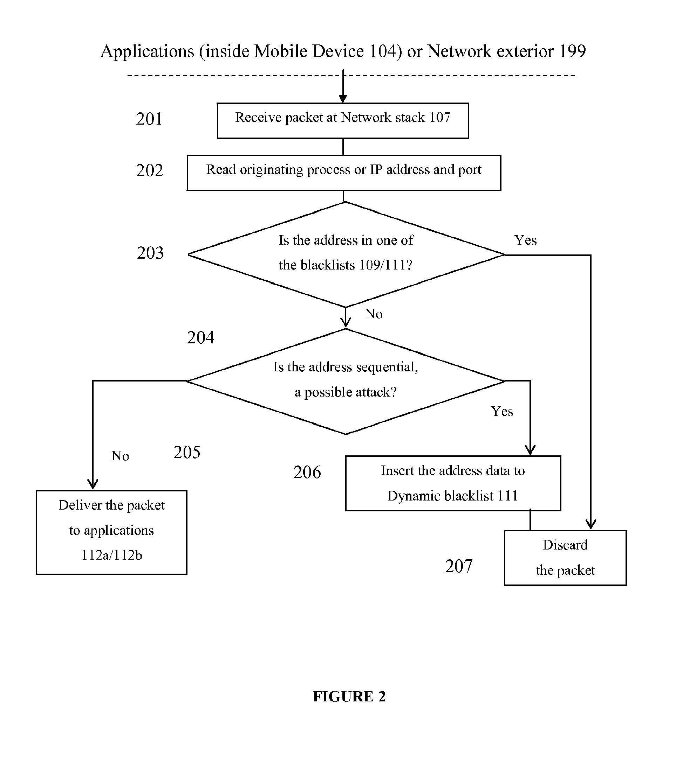

Figure 2 shows a flow of processing data packets within Mobile Device 104, which provides a self-defending intrusion prevention system IPS 108 to anticipate and drop requests for the next IP address or port number, while allowing access to addresses and ports outside of that pattern. When Network Stack 107 receives a packet (201) from Application within Mobile device 104 or from an external device on Network exterior 199, its application process or originating IP address and port number information are read from the packet (202), IPS 108 compares the information against blacklists 109/111 (203). If the process or address is in one of the blacklists 109/111, the data packet is dropped, and is not delivered to the destination. If the information is not found in the blacklists 109/11, then IPS 108 compares if the address is sequential, and determines if it is a possible attack by repeated accesses (204). If IPS 108 determines that it is an attack (204), then IPS 108 inserts the process or address information to Dynamic blacklist 111 (206), and discards the packet (207). Otherwise, the packet is delivered to destination applications 112a/112b (205).

The port numbers and IP addresses may not be strictly sequential but in some repetitive or predictable pattern. Upon detection of problematic patterns the invention allows the network to effect remedial or defensive action by dropping functions.

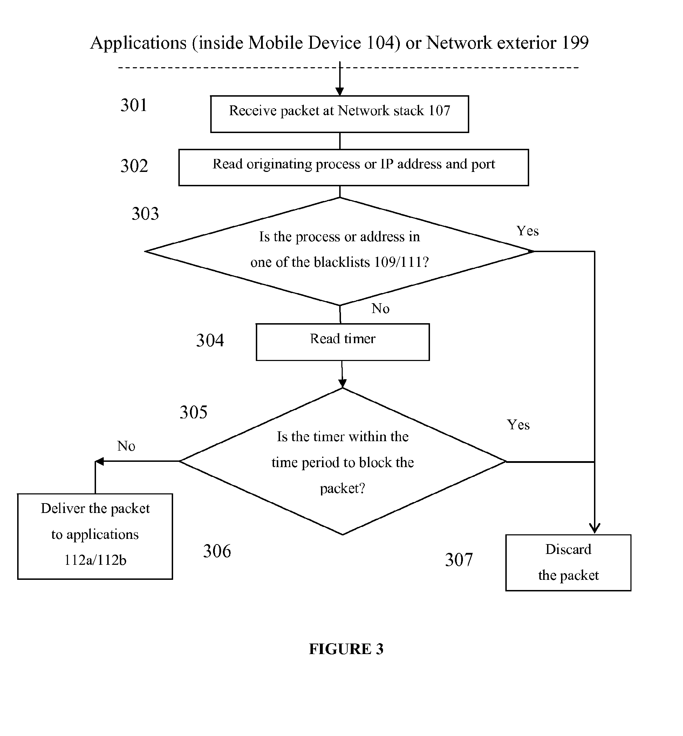

Figure 3 shows an example where transmission of packet data is blocked during a preset period of time. A data packet arrives from Applications (inside Mobile Device 104) or Network exterior 199 to Network stack107 (301), information about a sender or originating entity, such as process information or an IP address and a port number is read. If the information is not in any of the blacklists 109/111 (303), a self-defending intrusion prevention system IPS 108 reads Timer 114 (304). Timer 114 counts and maintains time, and IPS 108 uses it to determine whether it is to deliver or drop the packet to destination or deliver based on time (305). IPS 108 delivers packet to destination if it is not during a block period (306), and discards the packet if it is during a block period (307). Blocking of packet traffic occurs at intervals for a predetermined time period so that applications can process when the network connectivity is available to, for example, save data to the cloud across the Internet 100.

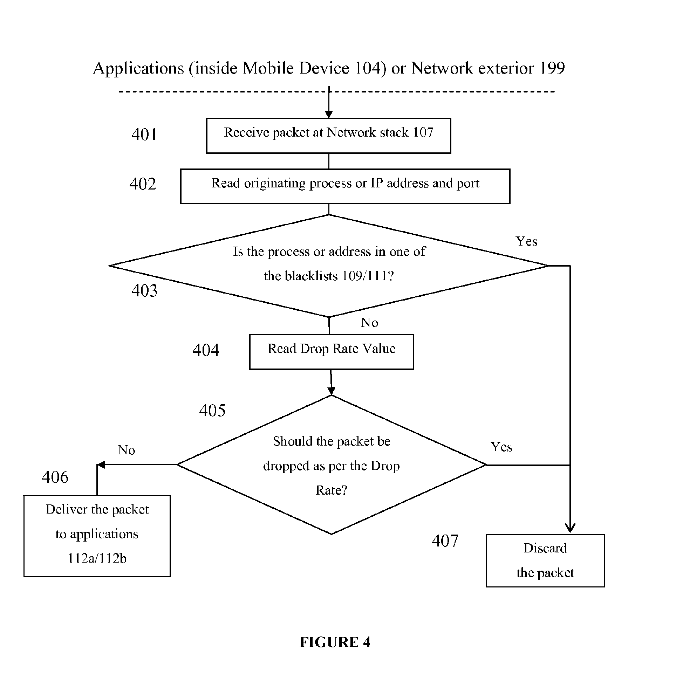

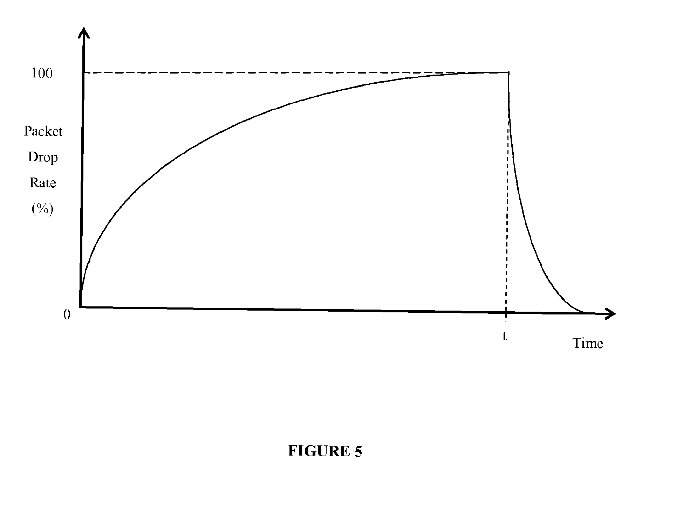

In the cases where the scans are highly randomized both with respect to the selection of targets and the times at which the scans are performed, the a self-defending intrusion prevention system IPS 108 may progressively limit the rate at which packets are transmitted. Figure 4 shows an example of the IPS 108 progressively limiting the rate at which packets are transmitted. The IPS108 may progressively drop an increasing percentage of network packets at random, and may eventually block traffic, for a limited period of time. Network Stack 107 receives a packet from Application from within the Mobile Device 104 or Network exterior 199 (401). IPS 108 reads originating application process, or IP address and port number information about the packet (402). If the address is in one of the blacklists 109/111 (403), then IPS 108 discards the data packet. If not, IPS 108 reads Drop Rate Value (404). Drop Rate Value is a rate which the IPS 108 drops packets; the rate of 0% means all packets are passed through, and the rate of 100% means all packets are dropped and not delivered to destinations. A calculation is done to determine if the packet is to be dropped or to be kept. For example, X = (A randomly generated number between 0 and 1) x (Drop Rate Value % / 100) is calculated. If the value of X is less than 0.5 then the packet is to be kept. If the value of X is greater than and equal to 0.5 then the packet is to be dropped. If the packet is to be dropped as per the Drop Rate (405), then IPS 108 discards the packet (407). If the packet is to be kept, the IPS 108 proceeds to deliver the packet to destination applications 112a/112b. Figure 5 describes an example of Packet Drop Rate versus time elapsed since the IPS 108 determines that the connectivity service quality needs to be degraded because of the risk of intrusion to the Mobile Device 104. Such a relationship between the Packet Drop Rate and time can be in various types including but not limited to a linear relationship, and the relationship can be changed by IPS 108.

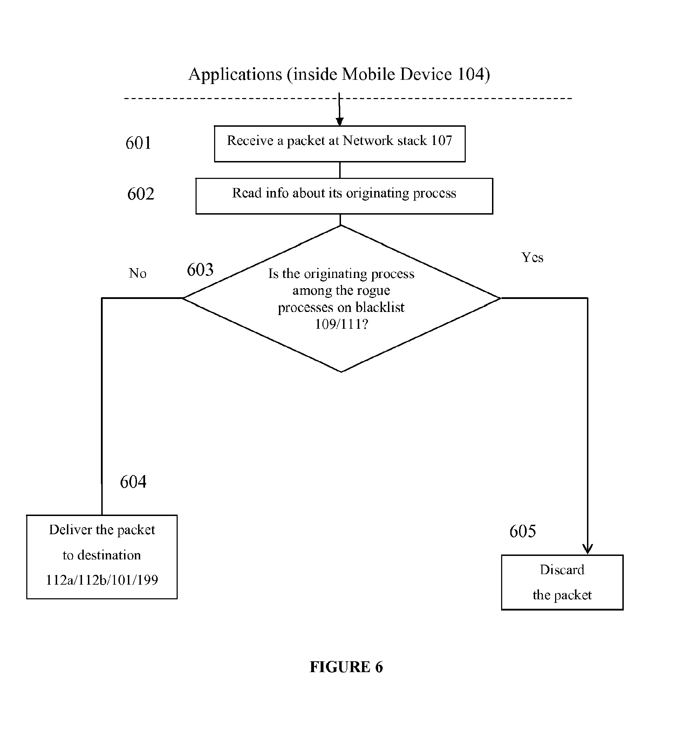

In another embodiment, this invention drops packets that originate from the rogue process while allowing packets between others. According to Figure 6, the Network Stack 107 receives a packet arriving from an application inside the Mobile Device 104 (601). Information about originating process is read from the packet (602). IPS 108 determines if the originating process is among the rogue processes as listed on the blacklist 109/111 (603). If the packet originates from a process that is not listed in the blacklist 109/111, then the packet is delivered to its destination 112a/112b (604). If the destination is an entity on the external network, this packet is sent to the destination via appropriate Network Interfaces (105/106) and respective networks (101/102) in the Network Exterior 199. However, if the packet is determined as sent by a rogue process, then the packet is discarded (605). When IPS 108 may detect patterns of attacks (intended to repeatedly send traffic to a single destination), the IPS 108 may add the targeted address to the dynamic blacklist, thereby causing all traffic intended for that address to be restricted or even silently dropped, without restricting the traffic to other addresses.

A self-defense countermeasure is provided to defend against an infected application or malware within the Mobile Device 104, which may be programmed to wake up and perform bursts of scans at regular periodic intervals. Upon detection, the IPS 108 can recognize and block traffic occurring at these regular periodic intervals. Again, during these times, the device owner may experience some loss of performance. But this loss may be more tolerable than the complete loss of service that would occur using known solutions available today.

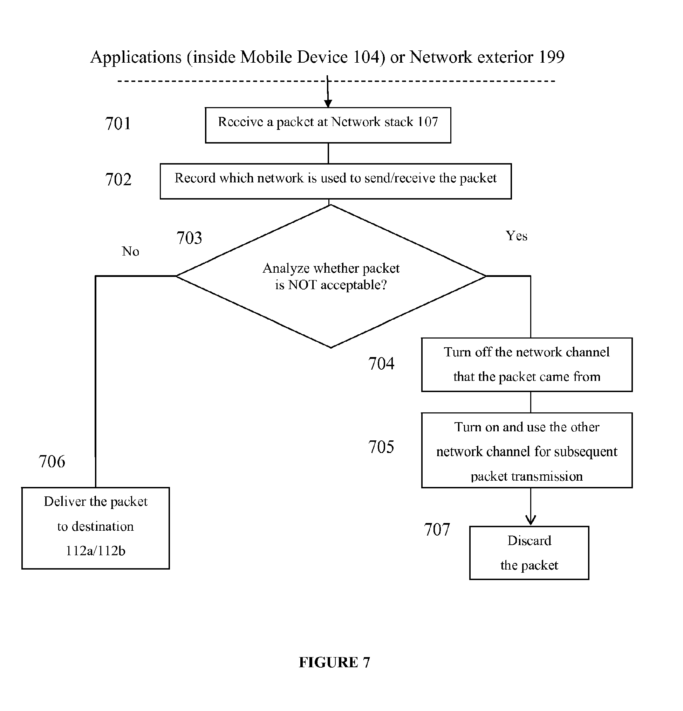

In another embodiment, in the case where a device containing a self-defending intrusion prevention system IPS 108 solution has multiple channels of communication (for example, a wireless local-area network radio and a cellular data modem), the IPS 108 according to this invention may choose to block traffic that is being routed to one of the communication channels while allowing traffic to continue to flow on other channels. As shown in Figure 7, the Network Stack 107 receives a packet (701) from Application within the Mobile Device 104 or from an entity in the Network exterior 199. The Network Stack 107 records the network channel through which the packet was routed (702). IPS 108 analyzes and determines whether the packet should be delivered to its destination by confirming if either the originating process in case of data originating from within the Mobile Device 104, or the originating IP address is on the blacklist 109/111. If it should be allowed or acceptable, then IPS 108 delivers the packet to destination 112a/112b if it is internal to the Mobile Device 104, or to Network External 199. If it is not acceptable, then IPS identifies the network channel that the packet is to be routed, and instructs a corresponding network interface to turn the connection off. For example, if the packet is transmitted via Cellular Network Interface 106, IPS 108 instructs Cellular Network Interface 106 to turn the interface off. Even after the Cellular network 102 becomes inaccessible, this embodiment allows data to access the Internet 100 via the 802.11 network 101 as the Network Stack 107 continues to accommodate data transmission via the 802.11 Network Interface 105. The blocking could consist of dropping only the suspected packets, or it could consist of shutting down all communications on a channel. This may be especially useful when the channel in question is a relatively high-value link such as a cellular network, because of reducing data communication cost by shutting down the network channel communication.

In another embodiment, a particular set of addresses may be kept and referred to as a static whitelist for network location such as mission-critical servers, like the servers that administer the policies of the IPS 108. This would allow the IPS 108 to transmit information about a threat in progress within the Mobile Device 104, or receive updated rules or policies to provide an improved defense against the threat.

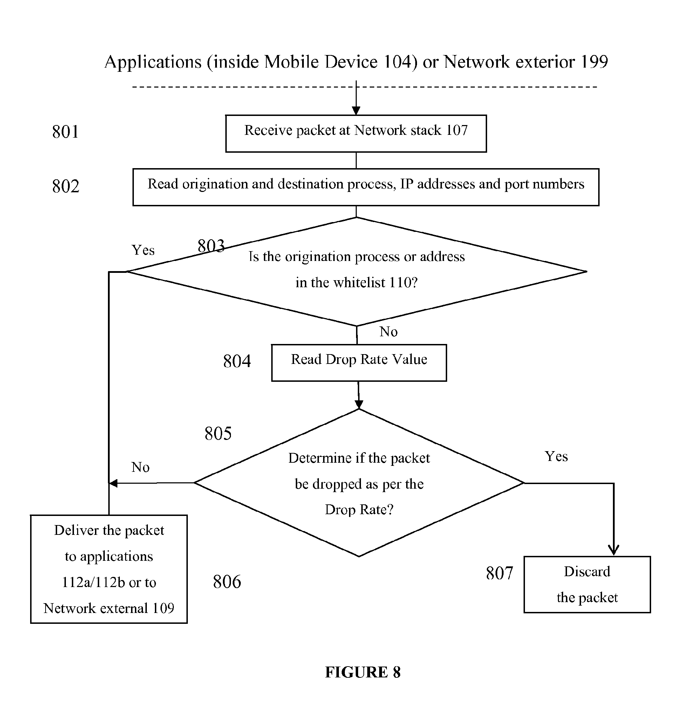

As shown in Figure 8, this invention uses a whitelist 110 to continue communications with an IPS 108 administration server about ongoing threat status while dropping other communications. Figure 8 describes steps related to the embodiment. The Network Stack 107 receives a data packet (801). Process or IP addresses as well as port number information for both origination and destination are read from the packet (802). IPS 108 checks if the origination information is in the whitelist 110. If the address is in the whitelist 110 (803), then the packet is delivered to destination applications 112a/112b within the Mobile Device104 or an entity in Network External 199 (806). The origination may be the IPS 108 administration server over the Internet 100. If the origination address is not in the whitelist 110 (803), IPS 108 reads the Drop Rate value (804) to determine if the packet needs to be dropped as per the current Drop Rate. The packet is discarded if IPS 108 decides that it needs to be dropped (807). The packet is delivered to the destination applications 112a/112b if IPS 108 decides to keep the packet.

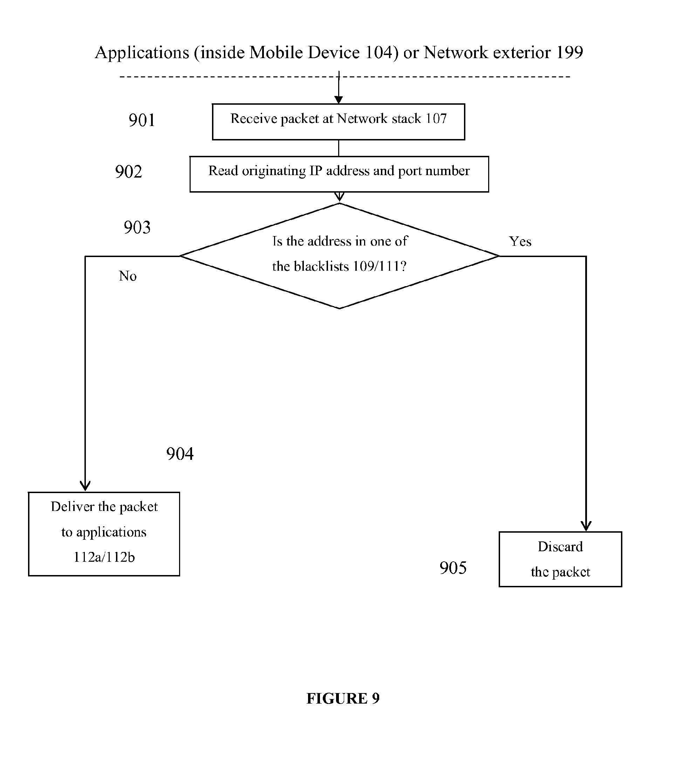

Figure 9 illustrates a flow where packets are selectively dropped by use of blacklist. A data packet may be received (901). An origination information such as process or IP addresses as well as port numbers are read from the packet (902). It may be determined if the origination information is in a blacklist. If the information is not in the blacklist (903), then the packet is delivered to destination applications (904). If the information is in the blacklist (903), then the packet is discarded (905).

In accordance with aspects of the invention, the self-defending IPS 108 provided herein can identify these patterns through any of a variety of recognition techniques that are commonly known in the art. Upon detection of problematic patterns, other features of the invention allows the network to effect remedial or defensive actions such as performing the dropping functions as described above.

In the cases where the selection of addresses and ports is pseudorandom, pattern recognition of the targets may not be feasible. However, the malware may still be programmed to scan these addresses at a high rate of speed, and this rapid network traffic may be detected and controllably dropped by the IPS 108. If the device owner happens to perform a network operation during one of these intervals, then they may experience partial degradation of service because some number of legitimate packets will also be dropped. However, this temporary or partial loss of service is still preferable to the complete loss of service provided in the prior art.

If the device on which the IPS 108 is installed is a multitasking, concurrent processing device, and if its operating system allows the IPS 108 to determine which processes are transmitting which packets, the IPS 108 may be able to detect which process or processes are the source of the malicious traffic, and drop all packets which originate from that process, while allowing traffic from all other processes to flow freely. If the process is a useful program that has been infected with malware, then this will degrade the usefulness of the infected program, but will not otherwise impede any other programs on the device.

As illustrated in Figure 1, some embodiments of the invention may include the IPS 108 maintaining a static and/or dynamic "blacklist" of addresses which can be updated and modified as threats are detected. The blacklist maintains a listing of network addresses such that network communications with such addresses - whether arriving from those addresses or destined for those addresses - may be restricted or disallowed altogether, such as by dropping all packets referring to those addresses. In some cases, the blacklist may contain known hostile addresses and may be statically fixed or pre-populated by an administrator or user, either locally or remotely. The dynamic blacklist may allow the IPS 108 to automatically update the blacklist of hostile addresses. For example, instead of scanning a broad range of addresses to search for vulnerabilities, a malicious or infected program may be intended to repeatedly send traffic to a single destination, or a relatively small collection of known destinations, perhaps as part of a Distributed Denial of Service (DDoS) attack. Upon sensing this pattern of traffic, the IPS 108 may add the targeted address to the dynamic blacklist, thereby causing all traffic intended for that address to be restricted or even silently dropped, without restricting the traffic to other addresses.

One or more components, features, characteristics or steps can be combined in whole or in part with any of the embodiments described herein. These may include components, features, characteristics or steps provided in U.S. Patent Application Serial No. 61/586,078, which is hereby incorporated by reference in its entirety.

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

## Claims

1. A method for protecting a device with a self-defending intrusion prevention system, "IPS", comprising the following steps:
monitoring the data packets to detect a pattern of activity indicating a potential attack that originates within the device;
detecting a threat originating from within the protected device; and
initiating, upon detection of the threat, a countermeasure or progressive degradation of network services available on the devices on a selected basis to controllably reduce performance of data communication of the device.

2. The method of claim 1, wherein said countermeasure or progressive degradation includes determining whether to deliver or discard a particular data packet provided to the network device based on information about the particular data packet.

3. The method of claim 1 or claim 2, wherein said countermeasure or progressive degradation includes reducing performance of data communication of the device over a selected period of time.

4. The method of claim 3, wherein said determination whether to deliver or discard a particular data packet is made based on information that is not limited to an originating IP address of the data packet.

5. The method of claim 3 or claim 4, wherein the determination to deliver or discard a particular data packet is made while the device is permitted to continue operating.

6. The method of any one of the preceding claims, wherein the pattern of activity includes sequentially accessing IP addresses or performing port scans on sequential port numbers.

7. A method for providing device protection comprising the following steps:
receiving a data packet at a network device;
reading information, with aid of a processor, from the data packet; and
analyzing, with aid of the processor, whether to discard or deliver the data packet to destination based on the information, wherein said analysis considers information of the data packets that originates within the device, and selectively discarding the data packets that originate from a rogue application within the device.

8. The method of claim 7, wherein the data packet is received at a network stack of the network device.

9. The method of claim 7 or claim 8, wherein the information is not limited to an originating IP address of the data packet.

10. The method of claim 9, wherein the information that is not limited to an originating IP address of the data packet includes one or more of the following: process, port number, originating process, network used to receive the data packet, destination address, or other IP addresses from other packets.

11. The method of any one of claims 7 to 10, wherein the analysis also considers the originating IP address of the data packet.

12. The method of any one of claims 7 to 11, wherein the analysis includes determining whether an originating process for the data packet is on a blacklist or whitelist.

13. The method of any one of claims 7 to 12, wherein the analysis includes considering a read drop rate value for the data packet.

14. The method of any one of claims 7 to 13, wherein the analysis includes determining whether the address is sequential and/or is part of repeated accesses.

15. The method of any one of claims 7 to 14, further comprising reading a timer of the network device, wherein the analysis includes considering the time read from the timer.

16. The method of any one of claims 7 to 15, further comprising turning off a network channel that the data packet came from if a determination is made to discard the data packet through said analysis.

17. The method of claim 16, further comprising turning on and using another network other than the network channel that the data packet came from.

18. A device for providing network protection, said device comprising:
a network interface configured to permit receipt of a data packet from a network external to the device;
a network stack in communication with the network interface;
one or more applications capable of sending and receiving the data packet; and
an self-defending intrusion protection service module in communication with the network stack programmed to analyze the data packet that originates from the one or more applications within the device and determine whether the data packet is to be delivered to destinations or to be discarded to protect the device from the intrusion threat.

19. The device of claim 18, wherein the self-defending intrusion protection service module is configured to communicate with one or more static blacklist, dynamic blacklist, or static whitelist containing information about origin or senders of packets that require attention.

20. The device of claim 18 or claim 19, wherein the device includes a 802.11 network interface and a cellular network interface.

21. The device of any one of claims 18 to 20, wherein the device also includes a timer configured to communicate with the intrusion network service module.

22. The device of any one of claims 18 to 21, wherein the intrusion protection service module performs said analysis and determination based on information from the data packet that is not limited to an originating IP address of the data packet.
